# EUROPEAN PATENT SPECIFICATION

(11) **EP 0 366 913 B1**
(45) Date of publication and mention of the grant of the patent: **22.11.1995**
(21) Application number: 89116971.6
(22) Date of filing: 13.09.1989
(51) Int. Cl.: G06K 11/08

(54) **Photoelectric switching device for a coordinate detection system**
Fotoelektrische Schaltvorrichtung für Koordinatenerkennungssystem
Dispositif commutateur photoélectrique pour système de détection de coordonnées

(30) Priority: 01.11.1988 JP 277997/88
(43) Date of publication of application: 09.05.1990
(73) Proprietor: MITSUBISHI DENKI KABUSHIKI KAISHA, Tokyo 100 (JP)
(72) Inventor: Nounen, Michiyasu c/o Mitsubishi Denki K.K., Sanda-shi Hyogo 669-13 (JP); Taketoshi, Kouichi c/o Mitsubishi Denki K.K., Sanda-shi Hyogo 669-13 (JP); Uragata, Yoshihiro c/o Mitsubishi Denki K.K., Sanda-shi Hyogo 669-13 (JP)
(74) Representative: Strehl Schübel-Hopf Groening & Partner

(56) References cited:
- EP-A- 0 330 767
- FR-A- 2 344 066
- US-A- 3 764 813
- US-A- 4 198 623

## Description

The present invention relates to a photoelectric device for detecting the presence of an object of a position, such as a photoelectric switching device for a coordinate data input device, so-called a touch panel, to be installed adjacent to an associated CRT (Cathode Ray Tube) or other display unit.

Japanese Laid-open Patent Publication No. 61,224/1987 discloses a prior art coordinate input device. FIG. 1 shows the schematic diagram of the prior art, wherein, 1 denotes a liquid crystal display unit, 2a's are two mutually perpendicular linear arrays of infrared light-emitting elements or light emitting diodes for emitting the infrared light along the lateral and longitudinal light paths respectively, 3a's are two mutually perpendicular linear arrays of associated photo-detector elements for detecting infrared light from the respective light emitting diodes, and 4 denotes a user's finger placed on the face of display unit showing how to block the infrared light along the lateral and longitudinal paths A and B of light being emitted from the light-emitting diodes.

According to the prior art system, each light emitting element 2a emits light one by one in a sequential manner under the control of a control circuitry (not shown) and each associated photo-detector element 3a receives the light one by one in the same manner. If the light path A in the lateral direction and the light path B in the longitudinal direction are blocked respectively by a finger, for instance, the photo-detector elements 3a's that correspond to the light paths A and B will produce a signal for indicating the blocking of the light paths; hence the control circuitry will locate the spatial coordinates of the finger 4 by discriminating the sources of the signals produced by the photo-detector elements. Therefore, various operations such as the change of display, the control of optional equipments being installed and the like are carried out by detecting the spatial coordinates of the finger 4 on a pattern (not shown) to be displayed on the face of display unit 1 for entering a switching input.

Such a prior art coordinate detection system has been installed in an instrument panel of an automobile for controlling a car audio set, an air conditioner and the like. In such a prior art system, the photo-detector elements that conform to the longitudinal direction along the light path B are normally installed at the upper portion of the display unit 1 for eliminating inadvertent operations to be caused by the ambient light such as the sun light. The detectors that conform to the lateral direction along the light path A are installed at the left side of the display unit 1 for decreasing the influence of the ambient light to a greater extent in the prior art system under such condition as the coordinate detection system is installed at the central part, between a driver's seat and a passenger's seat, of the instrument panel. This is because the ambient light from the driver's side may be effectively blocked by a driver since the driver always takes his seat at the right side in case of the right-hand drive vehicle. However, it is hard to prevent the ambient light via the passenger's side from reaching the right side of the display unit 1 if no-one is in the passenger's seat.

Accordingly, in the prior art system, it has been difficult to avoid inadvertent operations merely by installing the photo-detecting elements at the left side of the display unit 1 even though the ambient light from the driver's side is blocked by the driver considerably.

Further photoelectric input devices are disclosed in FR-A-23 44 066 and EP-A-0 330 767 (prior art under Art. 54(3) EPC). In these systems, arrays of light-emitting elements and photo-detecting elements are provided so that adjacent light beams are antiparallel. This allows the light beams to be arranged more closely to each other while preventing cross talk or interference between them. The presence or absence of an object at a certain position is detected by a single one of the antiparallel light beams.

The features of the preamble of claim 1 are known in combination from US-A-4,198,623. This document discloses a device in which a pair of light beams are used for detecting the presence of an object at positions along each of two coordinates on a CRT screen. The light beams are arranged so that, due to the curvature of the CRT screen, always one of the light beams of each pair is closer to the CRT surface than the other. The light beam closer to the CRT surface is used for detecting the presence of an object.

All these prior art devices have the disadvantage that they are susceptible to failure caused by ambient light.

It is therefore an object of the present invention to enable realisation of a photoelectric device having a lower susceptibility to inadvertent operations caused by ambient light.

This object is solved by the device specified in claim 1.
FIG. 1 is a schematic diagram of the prior art system;
FIG. 2 is a block diagram of an embodiment of this invention;
FIG. 3 is an enlarged illustration of an object detecting unit; and
FIG. 4A and 4B are flowcharts showing the operation steps performed by the microcomputer of FIG. 2.

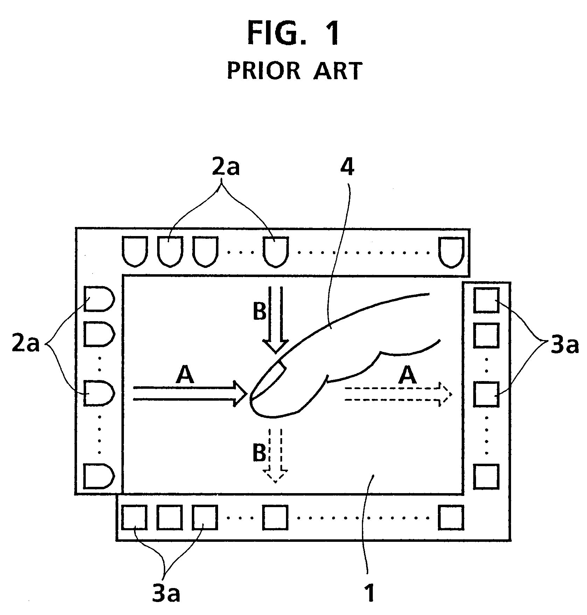

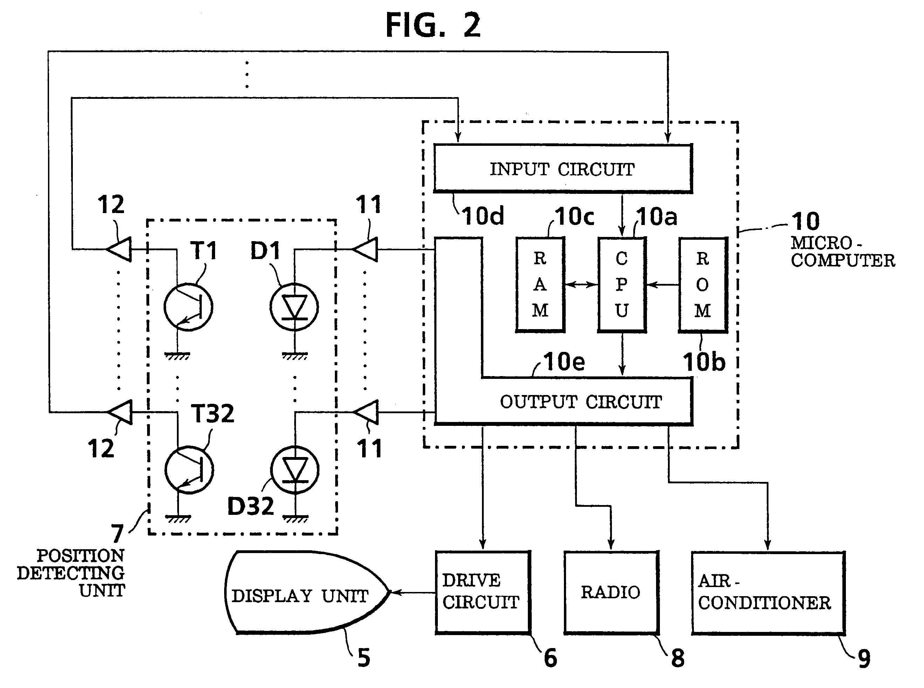

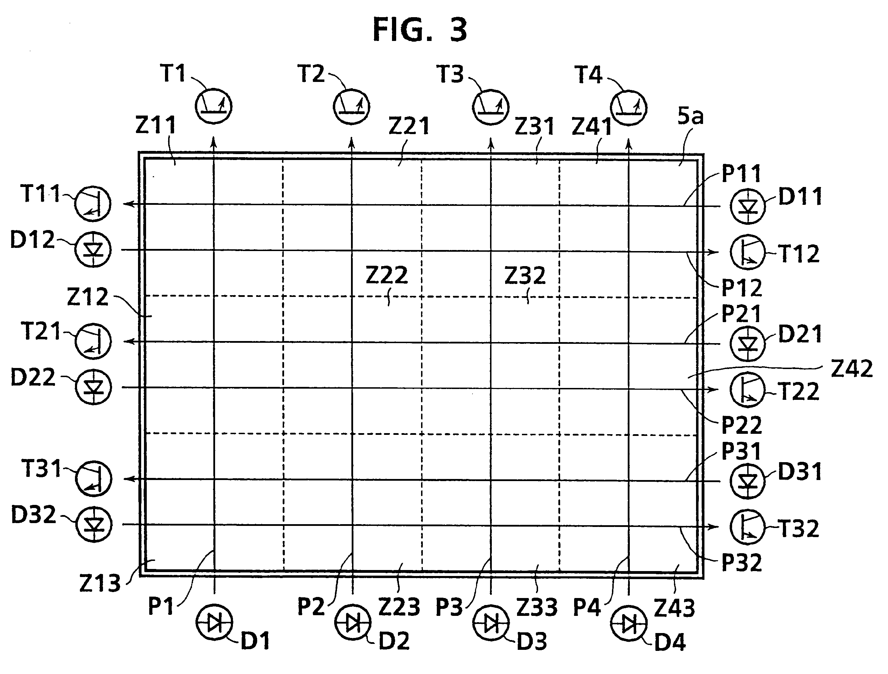

The embodiment of the present invention will now be described in more detail with reference to the accompanying drawings. Referring now to FIG. 2, there is shown a block diagram, wherein 5 designates a display unit including a CRT tube of the type installed in an instrument panel (not shown) between the driver's seat and the passenger's seat, which is the same installation as the prior art system for the right-hand drive vehicles as is described above with reference to FIG. 1, 6 designates a driving circuit for the display unit 5, 7 is a position detecting unit (will be described with reference to FIG. 3 hereinafter) installed at the periphery of the display unit 5 in the similar manner to the prior art for detecting the spatial location of a user's finger, 8 and 9 are a radio and an air conditioner respectively, and 10 denotes a microcomputer consisting of a CPU 10a, ROM 10b, RAM 10c, an input circuit 10d and an output circuit 10e for the control of the driving circuit 6, the position detecting unit 7, the radio 8 and the air conditioner 9. FIG. 3 is an enlarged diagram for illustrating the position detecting unit 7, in which 5a denotes a display of the display unit 5. The display 5a is divided into 12 regions Z11 - Z43 provided by 3 regions in the longitudinal direction and 4 regions in the lateral direction, as shown by the dotted lines in the drawing. By assigning X1 through X4 for lateral coordinates and Y1 though Y3 for longitudinal coordinates, for the convenience of understanding, a position on the display will be specified by coordinates (Xi, Yj) (where i =1, 2, 3, 4, and j = 1, 2, 3) as shown in the drawing. D1 through D4 are light emitting elements consisting of infrared light emitting diodes mounted on the lower side of the display unit 5 and they emit infrared light upwards respectively along light paths designated by P1 through P4. T1 through T4 are photo-detecting elements consisting of photo-transistors mounted on the upper side of the display unit 5 for receiving the light from the light emitting elements D1 through D4 and generating a block signal when any one of the light paths P1 through P4 is blocked by a finger. D11, D21 and D31 constitute a first array of light emitting elements consisting of infrared light emitting diodes which are mounted on the right side (driver's seat side) of the display unit 5 for providing light paths P11, P21 and P31 by transmitting light towards the left side of the display 5a. T11, T21 and T31 constitute a first array of photo-detecting elements consisting of photo-transistors which are mounted at the left side (passenger's seat side) of the display 5a for receiving the light from the first array of light emitting elements and generating a first block signal when any one of the light paths P11, P21 and P31 is blocked by a finger. D12, D22 and D32 constitute a second array of light emitting elements consisting of infrared light emitting diodes for providing light paths P12, P22 and P32 by transmitting the light towards the right side of the display 5a. T12, T22 and T32 constitute a second array of photo-detecting elements consisting of photo-transistors which are mounted on the right side of the display 5a for receiving the light from the second light emitting elements D12, D22 and D32 and generating a second block signal when any one of the light paths P12, P22 and P32 is blocked by a finger. The light path P1 passes through the regions Z 11, Z12 and Z13, the light path P2 through the regions Z21, Z22 and Z23, the light path P3 through the regions Z31, Z32 and Z33, and the light path P4 through the regions Z41, Z42 and Z43 in the similar manner. On the other hand, the light paths P11 and P12 pass through the regions Z11, Z21, Z31 and Z41 simultaneously in the opposite directions; similarly, the light paths P21 and P22 pass through the regions Z12, Z22, Z32 and Z42, and the light paths P31 and P32 pass through the regions Z13, Z23, Z33 and Z43 respectively.

Further, every light emitting element (D1 and others) is driven by the microcomputer 10 through an amplifier 11 and every photo-detector (T1 and others) is connected to the microcomputer through an amplifier 12 for the transmission of each block signal as shown in FIG. 2.

In accordance with the embodiment illustrated in the above, the regions Z11 - Z43 in the display 5a of the display unit 5 are assigned to display specific patterns (not shown) such as channel selection buttons, volume control button and the like for the operation of the radio 8. With this arrangement, if a user's finger is placed on a pattern which indicates a desired operation, for instance the region Z11, the longitudinal light path P1 and the lateral light paths P11 and P12 will be blocked entirely by the finger and the photo-detector elements T1, T11 and T12 will produce block signals that correspond to the required operation. The microcomputer 10 discriminates, by receiving the derived block signals, the region Z11 at which the longitudinal light path P1 and the lateral light paths P11 and P12 are blocked at the same time and, then, controls the radio 8, for instance, based on the operating functions assigned to the region Z11. The microcomputer 10 is capable of discriminating the regions Z11, Z21, Z31 and Z41 where the lateral light paths P11 and P12 pass through even if one of the lateral light paths P11 and P12 is not blocked with a finger and there is derived only one block signal, from either of the first or second photo-detecting elements T11 or T12. With this capability, even in such an environment as the strong ambient light falls on the display 5a from the left to the right side thereof, the first photo-detecting element T11 can produce the first block signal whilst the second photo-detecting element T12 is not capable of producing a second block signal. Similarly, the second photo-detecting element T12 can produce the second block signal without fail under such an environment as a strong ambient light falls on the display 5a from the right to the left side thereof. As described above, in the installation of the photo-electric switching device to a vehicle, since the strong ambient light like sun light falls generally on the display 5a from the upper side to the lower side thereof, it causes no problems to only install the photo-detecting elements T1 through T4 at the upper side of the display 5a.

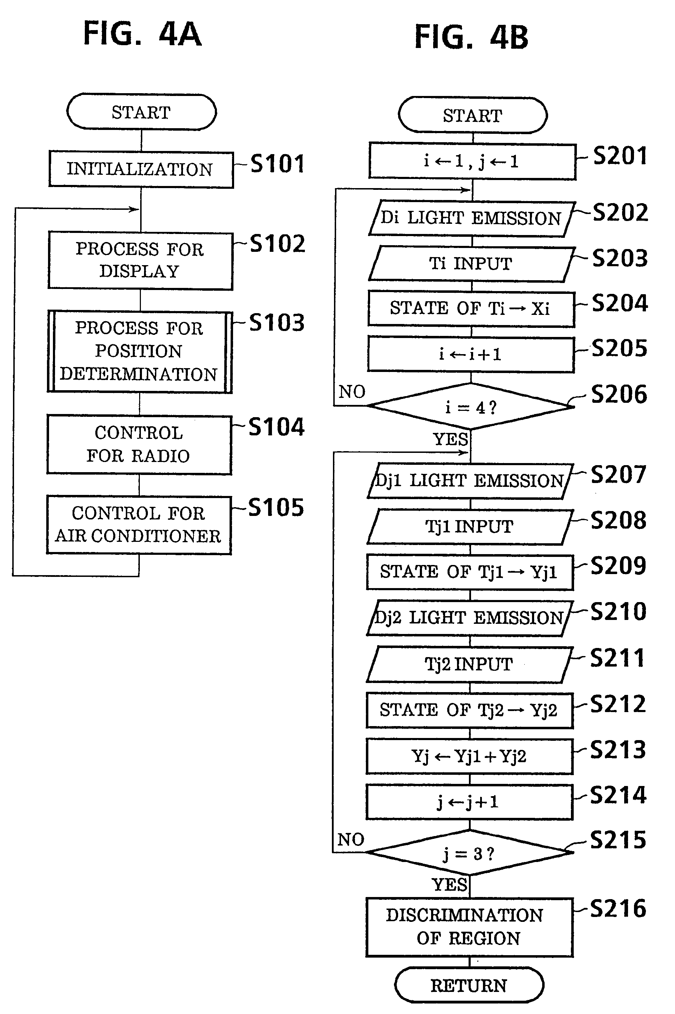

Referring now to Figs. 4A and 4B, there are shown flowcharts implemented by the microcomputer 10 of FIG. 2. In the main flowchart of FIG. 4A, the microcomputer performs a first step S101 of initialization upon initiation of the apparatus. A display process for delivering a signal of displaying a predetermined pattern on the display unit 5 to the drive circuit 6 is performed at step S102. The control of the position detecting unit 7 is performed at step S103, thereby carrying out the position detecting process for discriminating a region of the display 5a where a finger is on. The detailed steps of the step S103 are shown in FIG. 4B. First, an initial setting of parameters "i" and "j" to "1" is performed respectively at step S201 after starting the flow. Next, step S202 outputs a signal for exciting a light emitting element Di. An output signal (indicating the existence of a block signal) of a photo-detecting element Ti is accepted at step S203 and the status of a photo-detecting element Ti is memorized on a memory Xi at step S204 whereby "1" is memorized if there is an output from the photo-detecting element Ti and "0" if there is not. Step S205 performs to renew a parameter "i" to "i + 1" and the program is returned from S206 to S202 until the parameter becomes 4 by the repeating of steps S202 - S205. With this arrangement, the status of blocking in any of the four light paths P1 - P4 along the longitudinal direction of the display 5a is memorized adequately. A first light emitting element Dj1 is excited to emit light at step S207. An output (indicating the existence of the first block signal) of a first photo-detecting element Tij is accepted at step S208 and the status of the first photo-detecting element Tij is memorized on a memory Yj1 at step S209 whereby "1" is memorized if there is an output from the first photo-detecting element Tj1 and "0" if there is not. In the similar manner, a second light emitting element Dj2 is excited to emit light at S210. An output (indicating the existence of a second block signal) of a photo-detecting element Tj2 is accepted at step S211 and the status of the second photo-detecting element Tj2 is memorized on a memory Yj2 at step S212 whereby "1" is memorized if there is an output from the second photo-detecting element Tj2 and "0" if there is not. Step S213 performs disjunction of memories Yj1 and Yj2 and the resultant is memorized on a memory Yj. Step S214 performs to renew a parameter "j" to "j + 1" and the program is returned from S215 to step S207 until the parameter j becomes 3 by repeating the steps of S207 - S215. The discrimination of the region at which the finger is placed is performed at step S216 basing on the contents of the memories Xi and Yj, that is, if the contents of the memories Xi and Yj are both "1" at the same time, then, the region Zij is discriminated as the region at which the finger is placed and the program returns to the main flowchart of FIG. 4A again for carrying out the successive steps. S104 performs the control of the radio 8, for instance, increasing a volume thereof, if the pattern corresponding to the region being discriminated at step S216 relates to said control. Step S105 performs the control of the air conditioner 9, for instance, increasing a setting temperature, if the pattern denotes an operational instruction for the air conditioner 9. In this way, the steps S102 - S105 are performed repeatedly.

As described above, according to the embodiment, it is required to detect the block of one light path P1 in the longitudinal direction of the display 5a for discriminating the region Z11 at which the finger is touched. However, also required is an object detection signal (the content of the memory Yj at step S213 corresponds to this signal in FIG. 4B) which indicates the existence of the finger in the lateral direction of the display 5a provided that either one of the first block signal or the second block signal is derived from the respective photo-detectors after detecting either one of the two lateral light paths P11 and P12 being blocked. In other words, since the first and the second photo-detectors T11 and T12 being related to the light paths P11 and P12 are so aligned as to have a predetermined angle with respect to each other (180 degrees for this embodiment), the partial position of the finger on the display 5a can be determined without fail by performing the disjunction of the first and the second block signals even if there is a strong incidence of ambient light which results in an inadvertent operation of either one of the associated photo-detectors. This is because at least the other photo-detector operates normally since there is no incidence of ambient light thereto.

It should be appreciated from the foregoing description that the present invention provides an improved switching device for detecting a partial position of finger on the display, whereby the light receiving surfaces of second photo-detecting elements are aligned in a different angle from those of the first photo-detecting elements for deriving an object detection signal from a control means if there is either one of the first and the second block signals. Therefore, this invention has a specific feature of detecting the object even if there is an inadvertent operation in either of the first and the second photo-detecting elements due to a strong incidence of the ambient light.

## Claims

1. A photoelectric device for detecting the absolute position (Z11, ..., Z43) of an object, comprising:
a first infrared light emitting element (D11, D21, D31),
a first infrared photo-detecting element (T11, T21, T31) for receiving the light emitted by said first infrared light emitting element along a first light path (P11, P21, P31) and producing a first output signal,
a second infrared light emitting element (D12, D22, D32),
a second infrared photo-detecting element (T12, T22, T32) for receiving the light emitted by said second infrared light emitting element along a second light path (P12, P22, P32) and producing a second output signal, wherein the light receiving surface of the second infrared photo-detecting element faces in a different direction to that of the first infrared photo-detecting element, and wherein said first and said second light paths both pass through the same region (Z11, ..., Z43),
a third infrared light emitting element (D1, ..., D4), the light path of which traverses those of the first and second infrared light emitting elements,
a third infrared photo-detecting element (T1, ..., T4) for receiving the light from said third infrared light emitting element and producing a third output signal, and
control means (10) for receiving said first, second and third output signals and determining the absolute position of said object,
characterised in
that said control means (10) comprises disjunction means receiving said first and said second output signals and subjecting them to an unconditional OR-operation, said absolute position being determined from the output of said unconditional OR-operation and the third output signal.

2. The device of claim 1, wherein said first and second light emitting elements consists of first and second arrays of light emitting diodes (D11, D12, ...) respectively and said first and second photo-detecting elements consist of first and second arrays of photo-detecting transistors (T11, T12, ...) respectively.

3. The device of claim 2, wherein said third light emitting element consists of a third array of light emitting diodes (D1 ... D4) disposed transversely to said first and second arrays of light emitting diodes (D11, D12, ...), and said third photo-detecting element consists of a third array of photo-detecting transistors (T1 ... T4) disposed transversely to said first and second arrays of photo-detecting transistors (T11, T12, ...).

4. The device of claim 3, wherein the third array of light emitting diodes (D1 ... D4) is mounted on the lower side of a frame and the third array of the photo-detecting transistors (T1 ... T4) is mounted at the upper side of the frame.

5. The device of any one of claims 1 to 4, wherein the control means (10) includes an input circuit (10d), an output circuit (10e), a central processing unit (10a), a random access memory (10c) and a read-only memory (10b).

6. The device of any one of claims 1 to 5, wherein the light path (P11, P21, P31) of the first light emitting element (D11, D21, D31) and the light path (P12, P22, P32) of the second light emitting element (D12, D22, D32) are arranged to pass through the same region allocated for the control of optional equipments (5 ... 9).

7. The device of any one of claims 2 to 5, wherein the light path (P11, P21, P31) of one light emitting diode (D11, D21, D31) of the first array of light emitting diodes and the light path (P12, P22, P32) of one light emitting diode (D12, D22, D32) of the second array of the light emitting diodes are arranged to pass through the same divided region or regions (Z11 ... Z43) allocated for the control of optional equipments (5 ... 9).

8. The device of any one of claims 1 to 7, wherein the first and the second light emitting elements (D11, D12, ...) emit light in lateral and preferably anti-parallel directions.

9. The device of any of claims 1 to 8, wherein said first light emitting element (D11,...) and said second photo-detecting element (T12,...) are mounted at one side of a display unit (5, 5a) whereas said second light emitting element (D12,...) and said first photo-detecting element (T11,...) are mounted at the other side of the display unit (5, 5a), wherein a plurality of regions (Z11,..., Z43) are displayed on said display unit (5, 5a) in alignment with corresponding light paths for indicating operable functions of optional equipments (5...9), said display unit being adapted for use in a vehicle.

## Patentansprüche

1. Photoelektrische Vorrichtung zur Erkennung der Absolutposition (Z11, ..., Z43) eines Objekts, aufweisend:
ein erstes Infrarotlicht emittierendes Element (D11, D21, D31),
ein erstes Infrarot-Photodetektorelement (T11, T21, T31) zum Empfang des von dem ersten Infrarotlicht emittierenden Element entlang eines ersten Lichtwegs (P11, P21, P31) emittierten Lichts und zur Erzeugung eines ersten Ausgangssignals,
ein zweites Infrarotlicht emittierendes Element (D12, D22, D32),
ein zweites Infrarot-Photodetektorelement (T12, T22, T32) zum Empfang des von dem zweiten Infrarotlicht emittierenden Element entlang eines zweiten Lichtwegs (P12, P22, P32) emittierten Lichts und zur Erzeugung eines zweiten Ausgangssignals, wobei die Lichtempfangsfläche des zweiten Infrarot-Photodetektorelements in eine andere Richtung als die des ersten Infrarot-Photodetektorelements weist und sowohl der erste als auch der zweite Lichtweg den gleichen Bereich (Z11, ..., Z43) durchqueren,
ein drittes Infrarotlicht emittierendes Element (D1, ..., D4), dessen Lichtweg diejenigen des ersten und des zweiten Infrarotlicht emittierenden Elements kreuzt,
ein drittes Infrarot-Photodetektorelement (T1, ..., T4) zum Empfang des von dem dritten Infrarotlicht emittierenden Element emittierten Lichts und zur Erzeugung eines dritten Ausgangssignals, und
eine Steuereinrichtung (10) zur Entgegennahme des ersten, des zweiten und des dritten Ausgangssignals und zur Bestimmung der Absolutposition des Objekts,
dadurch gekennzeichnet,
daß die Steuereinrichtung (10) eine Disjunktions-Einrichtung aufweist, um das erste und das zweite Ausgangssignal entgegenzunehmen und beide einer unbedingten ODER-Verknüpfung zu unterwerfen, und daß die Absolutposition aus dem Ergebnis der unbedingten ODER-Verknüpfung und dem dritten Ausgangssignal bestimmt wird.

2. Vorrichtung nach Anspruch 1, wobei das erste und das zweite lichtemittierende Element entsprechenderweise aus einem ersten und einem zweiten Feld lichtemittierender Dioden (D11, D12, ...) und das erste und das zweite Photodetektorelement entsprechenderweise aus einem ersten und einem zweiten Feld aus Photodetektortransistoren (T11, T12, ...) besteht.

3. Vorrichtung nach Anspruch 2, wobei das dritte lichtemittierende Element aus einem dritten Feld aus lichtemittierenden Dioden (D1, ... D4) besteht, die quer zu dem ersten und dem zweiten Feld aus lichtemittierenden Dioden (D11, D12, ...) angeordnet sind, und wobei das dritte Photodetektorelement aus einem dritten Feld aus Photodetektortransistoren (T1 ... T4) besteht, die quer zu dem ersten und dem zweiten Feld aus Photodetektortransistoren (T11, T12, ...) angeordnet sind.

4. Vorrichtung nach Anspruch 3, wobei das dritte Feld aus lichtemittierenden Dioden (D1 ... D4) an der unteren und das dritte Feld aus Photodetektortransistoren (T1 ... T4) an der oberen Seite eines Rahmens angebracht sind.

5. Vorrichtung nach einem der Ansprüche 1 bis 4, wobei die Steuereinrichtung (10) einen Eingangskreis (10d), einen Ausgangskreis (10e), eine zentrale Verarbeitungseinheit (10a), einen Speicher mit wahlfreiem Zugriff (10c) und einen Nur-Lese-Speicher (10b) aufweist.

6. Vorrichtung nach einem der Ansprüche 1 bis 5, wobei der Lichtweg (P11, P21, P31) des ersten lichtemittierenden Elements (D11, D21, D31) und der Lichtweg (P12, P22, P32) des zweiten lichtemittierenden Elements (D12, D22, D32) so angeordnet sind, daß sie durch den gleichen Bereich verlaufen, der der Steuerung von Zusatzgeräten (5 ... 9) zugeordnet ist.

7. Vorrichtung nach einem der Ansprüche 2 bis 5, wobei der Lichtweg (P11, P21, P31) einer lichtemittierenden Diode (D11, D21, D31) des ersten Felds aus lichtemittierenden Dioden und der Lichtweg (P12, P22, P32) einer lichtemittierenden Diode (D12, D22, D32) des zweiten Felds aus lichtemittierenden Dioden so angeordnet sind, daß sie durch den gleichen aufgeteilten Bereich bzw. die Bereiche (Z11 ... Z43) verlaufen, die der Steuerung von Zusatzgeräten (5 ... 9) zugeordnet sind.

8. Vorrichtung nach einem der Ansprüche 1 bis 7, wobei das erste und das zweite lichtemittierende Element (D11, D12, ...) Licht in Querrichtung und vorzugsweise antiparallel aussenden.

9. Vorrichtung nach einem der Ansprüche 1 bis 8, wobei das erste lichtemittierende Element (D11, ...) und das zweite Photodetektorelement (T12, ...) auf einer Seite einer Anzeigeeinheit (5, 5a) angeordnet sind, während das zweite lichtemittierende Element (D12, ...) und das erste Photodetektorelement (T11, ...) auf der anderen Seite der Anzeigeeinheit (5, 5a) angeordnet sind, wobei mehrere Bereiche (Z11, ..., Z43) auf die entsprechenden Lichtwege ausgerichtet auf der Anzeigeeinheit (5, 5a) angezeigt werden, um Betriebsfunktionen von Zusatzgeräten (5 ... 9) anzugeben, und wobei die Anzeigeeinheit zur Verwendung in einem Fahrzeug eingerichtet ist.

## Revendications

1. Dispositif photoélectrique pour détecter la position absolue (Z11, ..., Z43) d'un objet, comprenant:
- un premier élément émetteur de lumière infrarouge (D11, D21, D31);
- un premier élément photodétecteur infrarouge (T11, T21, T31) pour recevoir la lumière émise par ledit premier élément émetteur de lumière infrarouge le long d'un trajet lumineux (P11, P21, P31) et produire un premier signal de sortie;
- un deuxième élément émetteur de lumière infrarouge (D12, D22, D32);
- un deuxième élément photodétecteur infrarouge (T12, T22, T32) pour recevoir la lumière émise par ledit deuxième élément émetteur de lumière infrarouge le long d'un deuxième trajet lumineux (P12, P22, P32) et produire un deuxième signal de sortie, dans lequel la surface réceptrice du deuxième élément photodétecteur infrarouge est orientée dans une direction différente de celle dudit premier élément photodétecteur infrarouge, et dans lequel lesdits premier et deuxième trajets lumineux passent par la même région (Z11, ..., Z43);
- un troisième élément émetteur de lumière (D1, ..., D4) dont le trajet lumineux croise ceux des premier et deuxième éléments émetteurs de lumière;
- un troisième élément photodétecteur infrarouge (T1, ..., T4) pour recevoir la lumière provenant dudit troisième élément émetteur de lumière infrarouge et produire un troisième signal de sortie; et
- des moyens de commande (10) pour recevoir lesdits premier, deuxième et troisième signaux de sortie et déterminer la position absolue dudit objet,
caractérisé en ce que:
- lesdits moyens de commande (10) comprennent des moyens de disjonction recevant lesdits premier et deuxième signaux de sortie et les soumettant à une opération OU incondionnelle, ladite position absolue étant déterminée à partir du résultat de ladite opération OU inconditionnelle et du troisième signal de sortie.

2. Dispositif selon la revendication 1, dans lequel lesdits premier et deuxième éléments émetteurs de lumière sont constitués par des premier et deuxième groupements de diodes lumineuses (D11, D12, ...), respectivement, et lesdits premier et deuxième éléments photodétecteurs sont constitués par des premier et deuxième groupements de phototransistors (T11, T12, ...), respectivement.

3. Dispositif selon la revendication 2, dans lequel ledit troisième élément émetteur de lumière est constitué par un troisième groupement de diodes lumineuses (D1, ..., D4) disposé transversalement par rapport auxdits premier et deuxième groupements de diodes lumineuses (D11, D12, ...), et ledit troisième élément photodétecteur est constitué par un troisième groupement de phototransistors (T1, ..., T4) disposé transversalement par rapport auxdits premier et deuxième groupements de phototransistors (T11, T12, ...)

4. Dispositif selon la revendication 3, dans lequel le troisième groupement de diodes lumineuses (D1, ..., D4) est monté sur le côté inférieur d'un cadre, et le troisième groupement de phototransistors (T1, ..., T4) est monté sur le côté supérieur du cadre.

5. Dispositif selon l'une quelconque des revendications 1 à 4, dans lequel les moyens de commande (10) comprennent un circuit d'entrée (10d), un circuit de sortie (10e), une unité centrale de traitement (10a), une mémoire vive (10c) et une mémoire morte (10b).

6. Dispositif selon l'une quelconque des revendications 1 à 5, dans lequel le trajet lumineux (P11, P21, P31) du premier élément émetteur de lumière (D11, D21, D31) et le trajet lumineux (P12, P22, P32) du deuxième élément émetteur de lumière (D12, D22, D32) sont disposés pour passer par la même région affectée à la commande d'équipement optionnels (5, ..., 9).

7. Dispositif selon l'une quelconque des revendications 2 à 5, dans lequel le trajet lumineux (P11, P21, P31) d'une diode lumineuse (D11, D21, D31) du premier groupement de diodes lumineuses et le trajet lumineux (P12, P22, P32) d'une diode lumineuse (D12, D22, D32) du deuxième groupement de diodes lumineuses sont disposés pour passer par la même région divisée ou les mêmes régions divisées (Z11, ..., Z41) affectées à la commande d'équipements optionnels (5, ..., 9).

8. Dispositif selon l'une quelconque des revendications 1 à 7, dans lequel le premier et le deuxième éléments émetteurs de lumière (D11, D12, ...) émettent de la lumière dans des directions latérales et, de préférence, antiparallèles.

9. Dispositif selon l'une quelconque des revendications 1 à 8, dans lequel ledit premier élément émetteur de lumière (D11, ...) et ledit deuxième élément photodétecteur (T12, ...) sont montés d'un côté d'une unité d'affichage (5, 5a), alors que ledit deuxième élément émetteur de lumière (D12, ...) et ledit premier élément photodétecteur (T11, ...) sont montés de l'autre côté de l'unité d'affichage (5, 5a), et dans lequel une pluralité de régions (Z11, ..., Z43) sont affichées sur ladite unité d'affichage (5, 5a) en alignement sur les trajets lumineux correspondants pour indiquer des fonctions utilisables des équipements optionnels (5, ..., 9), ladite unité d'affichage étant adaptée pour utilisation dans un véhicule.
